# EUROPEAN PATENT APPLICATION

(11) **EP 3 266 589 A1**
(43) Date of publication of application: **10.01.2018**
(21) Application number: 16178449.1
(22) Date of filing: 07.07.2016
(51) Int. Cl.: B29C 51/22, B29C 51/44, B29C 51/04

(54) **THERMOFORMING MACHINE WITH A TILTING MOVING PLANE AND METHOD**

(71) Applicant: WM Wrapping Machinery SA, 6855 Stabio (CH)
(72) Inventor: GOTTI, Dario, 6855 Stabio (CH)
(74) Representative: Zardi, Marco

(57) **Abstract**

Thermoforming machine comprising: a fixed platen (1); a tilting moving platen (2); a fixed half-mould (3) integral with said fixed platen (1), a moving half-mould (4), which is supported by said moving platen (2); an extractor device (5) for extracting thermoformed articles from said moving half-mould (4), wherein said extractor device (5) is actuated by an electric motor (10).

## Description

### Field of the invention

The present invention relates to a thermoforming machine with a tilting moving plane, in particular for the production of plastic articles.

### Prior art

A thermoforming machine of the type considered here comprises generally a press assembly which includes in turn: a fixed half-mould, integral with a so-called fixed platen of the machine, a moving half-mould supported by a moving platen; a device for extracting the thermoformed parts.

Typically the fixed half-mould is an upper half-mould, integral with a gantry structure in turn forming part of the base of the machine, while the moving half-mould is represented by the lower half-mould.

The moving half-mould may assume, respectively, a moulding position in which it is coupled together with the fixed half-mould and a position for expulsion of the thermoformed parts. For this purpose the moving platen performs a roto-translatory motion, also called tilting. By this motion, the moving half-mould moves away from the fixed half-mould and inclines to facilitate the expulsion of articles, for example going forwards towards a store or an exit conveyor. The angle of inclination generally varies between about 60° and 90°.

The extractor device is charged of extraction of thermoformed articles from the mould and their transfer to a pick-up device which, for example, loads the articles into the store or transfers them to the conveyor. At the same time, the moving half-mould is freed for another moulding cycle.

It can be understood from the above that the working cycle of the extractor device must be duly synchronized with the working cycle of the pick-up device, to avoid standby downtime, which would slow down the machine, and to avoid the risk of damage to the articles caused by excessive stress (for example impacts) during the transfer from one device to the other.

In the prior art the extractor device is actuated pneumatically. For example actuation of said extractor device is given by a pneumatic actuator mounted in the moving platen, with suitable stops inside the mould acting as end-of-travel devices. Until now, the prior art has regarded the pneumatic actuation of the extractor device as an essential feature to ensure the necessary expulsion speed of thermoformed parts.

The applicant has however realized that the pneumatic extraction, while being satisfactory in many embodiments, reveals some limitations as the working speed of the machine, that is the number of moulding cycles per minute, increases. In particular, it has been noted that it becomes difficult to maintain the desired synchronicity between the pneumatic extractor device and the pick-up device, when the cycles/minute increase.

This is a problem because the market calls for thermoforming machines capable of large production volumes, and therefore high working speeds, in order to reduce the unitary cost of the parts. At the same time, however, articles of a complex shape and high quality are required, which means the machine must be fast, but precise as well.

It should be considered that a thermoforming machine of the type considered may operate with a speed high enough to require an extraction time of a few tenths of a second. For example, the fastest thermoforming machines reach about 50 cycles/minute, which means the entire working cycle, including the steps of forming, opening the mould, extracting the articles and closing the mould, is completed in a time of 1.2 seconds. Under these conditions the time available for extraction of the articles from the half-mould is about 0.2 seconds.

### Summary of the invention

The problem forming the basis of the invention is to improve the control of the extractor device and therefore of the process of extraction of the articles and their delivery to the downstream pick-up device.

The applicant has found that limitations in this respect of the prior art machines are due mainly to the pneumatic actuation of the extractor.

The behaviour of the pneumatic system in fact is influenced by the compressibility of air and is therefore affected by environmental factors (for example the temperature and humidity of the air) as well as any small leakage (loss of air-tightness). For these reasons the response of the pneumatic system is subject to fluctuations which cannot be reliably predicted or calculated. These fluctuations generally do not manifestly occur at low or medium working speeds, but they become non-negligible when the machine works at high speeds. In addition, at high speeds the pneumatic system is prone to slight jamming or irregular operation (also due to the different static and dynamic friction) which affects the synchronicity relative to the pick-up device.

For these reasons the applicant has found that the pneumatic system has a behaviour whose repeatability is not satisfactory especially at high speeds and, consequently, represents a "bottleneck" in the search for even more performant thermoforming machines.

Based on this finding, the aims of the invention are achieved with a thermoforming machine comprising:
a fixed platen;
a moving platen;
a fixed half-mould, which is integral with said fixed platen;
a moving half-mould, which is supported by said moving platen;
an extractor group for extracting thermoformed articles from said moving half-mould;
a control member of the extractor group;
said moving platen having a roto-translatory motion between a moulding position and a position of expulsion of the thermoformed articles;
the machine being characterized in that said control member of the extractor group comprises an electric motor to actuate said extractor group.

The idea underlying the invention is to control the extraction process directly with an electric motor, eliminating the interposition of the pneumatic system.

Some preferred features of the invention are described in the accompanying dependent claims.

The extractor group is preferably associated with said moving half-mould. The control member of the extractor group is instead preferably associated with the moving platen.

In a preferred embodiment, the extractor group comprises a plurality of extractor members movable between a rest position and a working position for extraction of the thermoformed articles, and the control member comprises a slider directly actuated by the motor. Said slider preferably has a forwards-backwards translatory motion according to an actuation direction which is preferably parallel to, or coincident with, a direction of extraction of said moving extractor members.

The electric motor may be a linear motor or a conventional motor (with a rotating shaft) according to different modes of implementing the invention.

When the electric motor is a linear motor, said slider forms the moving member of the said motor. When the electric motor is a rotary motor, the shaft of the motor operates said slider by means of a suitable transmission system which converts the rotation of the shaft into a translatory motion of said slider.

The extractor members, in a preferred embodiment, are shaped as rods extending essentially longitudinally. Preferably each of said rods has a termination adapted to extract the thermoformed articles from the moving half-mould. More preferably, said rods are fixed to a support plate against which said slider acts.

The extractor device intervenes at a predetermined point of the travel of the moving platen, which can coincide with an end-of-travel position (end of the roto-translatory motion away from the fixed platen) or can be an intermediate position. It should be noted that the working cycle of the extractor is synchronized with the working cycle of a device for picking up the articles, which is situated downstream and which, for example, transfers the thermoformed articles to a store or an output conveyor.

The advantage of the invention lies in the direct mechanical control by means of an electric drive ensuring a repeatable motion substantially unaffected by environmental factors. Consequently, the invention allows the extractor device to maintain a working cycle which is precisely synchronized with the pick-up device even when the machine operates with elevated cycle speed. In other words, the invention allows almost absolute control of the process of article extraction and, consequently, makes it easier to reach a high capacity.

The invention may be used in a particularly advantageous manner for thermoforming machines for the mass-production of articles, such as disposable plastic articles, cups, saucers, containers, trays for packaging and the like.

The invention also relates to a method for the manufacture of thermoformed articles in a thermoforming machine with a tilting moving platen, in which said moving platen has a roto-translatory motion between a moulding position and a position for expulsion of the thermoformed articles, the method comprising the moulding of thermoformed articles between a fixed half-mould and a moving half-mould and the expulsion of thermoformed articles from said moving half-mould, and being characterized in that said step of expulsion of the thermoformed articles is performed with an extractor device actuated by an electric motor.

The advantages of the invention will become even more evident with the aid of the detailed description below, with reference to the illustrative figures and describing a non-limiting example of embodiment.

### Brief description of the figures

Fig.1 shows in schematic form the main components of a thermoforming machine, according to an embodiment of the invention, provided with a fixed upper half-mould and a moving lower half-mould, in the moulding position.
Fig. 2 shows the components of Fig, 1 and shows the lower half-mould open.
Fig. 3 shows the step of expulsion of the thermoformed articles from the half-mould in Fig. 2.

### Detailed description

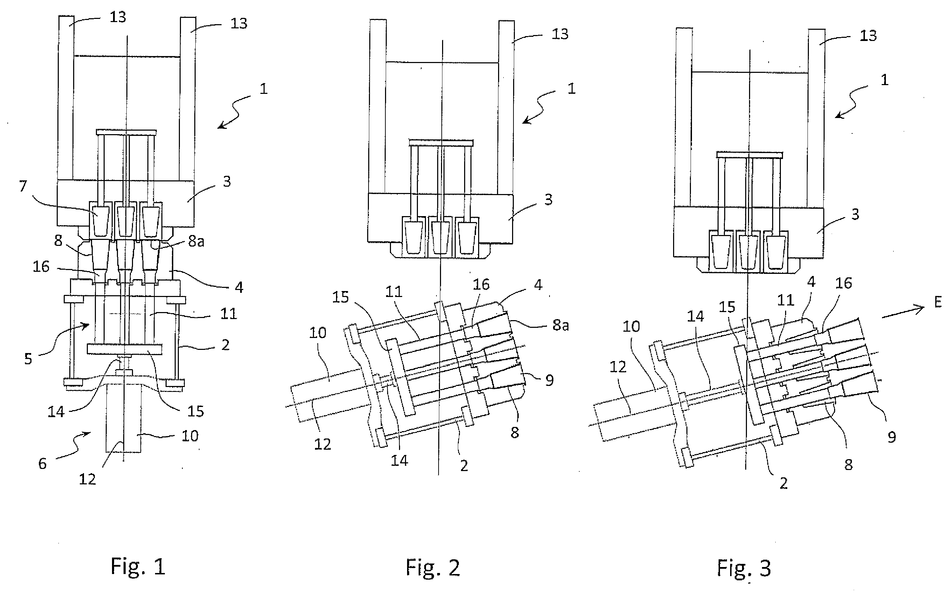

Fig. 1 shows some components of a thermoforming machine with a tilting (or roto-translatory) plane, and in particular: a fixed platen 1; a moving platen 2; a fixed upper half-mould 3; a moving lower half-mould 4; an extractor group 5; a control member 6 for the extractor group 5.

For the sake of brevity, the two half-moulds 3 and 4 will be indicated simply as moulds.

The fixed platen 1 is integral with a machine base (not shown) by means of, for example, two support columns 13.

The moving platen 2 has a roto-translatory motion from a "closed" moulding position, where it is coupled with the fixed platen 1 (Fig. 1), into an "open" position for expulsion of the thermoformed articles (Figs. 2 and 3).

The motion of the moving platen 2 is imparted by a system known per se, for example a cam mechanism controlled by a gearmotor, which is not shown in the figures.

The fixed upper platen 3 comprises a deep-drawing plug 7 and the moving lower mould 4 comprises a forming insert 8 shaped as the desired articles (for example cups).

During use, a thin sheet of plastic material is fed between the two moulds 3 and 4. The deep-drawing plug 7 stretches the sheet of plastic material (while the mould is closed) before introduction of pressurized air into the fixed upper mould 3. The forming insert 8 has an upper edge end 8a which operates as a cutting punch, working against a cutting die which is located on the fixed upper mould 3.

The fixed mould 3 and the moving mould 4 in this way allow thermo-forming of a batch of articles 9 for each moulding cycle. In the example, the articles 9 are plastic cups.

The extractor group 5 is associated with the moving lower mould 4, i.e. forms part of the mould 4 itself.

Said extractor group 5 essentially comprises a plurality of rods 11 fixed to a plate 15 and each having a suitable termination 16. The rods 11 are slidable collectively with respect to the moving mould 4 and with respect to the forming insert 8, in an extraction direction E (shown in Fig, 3).

The control member 6 is associated, instead, with the moving platen 2 and comprises essentially an electric motor 10 and an axis or slider 14. Said slider 14 is connected to the plate 15 and, consequently, acts on all t rods 11.

The electric motor 10 is able to impart to the slider 14 an actuating movement in an axial direction which is substantially parallel to the axis 12 of the moving mould 4 and which is parallel to the sliding direction E of the rods 11.

The extractor group 5 has a rest position, wherein the rods 11 are retracted inside their seats, and a working position, wherein the rods 11 protrude from the forming insert 8, pushing the thermoformed articles 9 outwards by means of respective terminations 16.

As can be understood by comparing Figures 2 and 3, by means of the action of the motor 10 the slider 14 advances in the direction E and in so doing, by means of the plate 15, causes the movement of the rods 11 relative to the lower mould 4 and relative to the forming insert 8.

After extraction from the lower half-mould 2, the articles 9 are transferred to a pick-up device, for example a gripping mandrel. Said articles are then temporarily accumulated in a store or transferred to an exit conveyor.

In an embodiment of the invention said motor 10 is a linear motor and therefore the slider 14 constitutes the moving part of said motor. In another embodiment said slider 14 is operated by a rotating shaft of the motor 10 (which in this case is a rotary motor) via a suitable transmission means for converting the rotary motion into a translatory motion.

The invention therefore achieves the objects described above. The motor 10 allows controlling the expulsion of the articles 9 with a high precision and a high repeatability also at elevated production speeds.

## Claims

1. Thermoforming machine comprising:
a fixed platen (1);
a moving platen (2);
a fixed half-mould (3), which is integral with said fixed platen (1);
a moving half-mould (4), which is supported by said moving platen (2);
an extractor group (5) for extraction of thermoformed articles from said moving half-mould (4);
a control member (6) of the extractor group (5);
said moving platen (2) having a roto-translatory motion between a moulding position and a position for expulsion of the thermoformed articles;
**characterized in that** said control member (6) comprises an electric motor (10) for the actuation of said extractor group (5).

2. Machine according to claim 1, wherein said extractor group (5) is associated to said moving half-mould (4).

3. Machine according to any one of the preceding claims, wherein said control member (6) of the extractor group (5) is associated to the moving platen (2).

4. Machine according to any one of claims 1 to 3, wherein:
said extractor group (5) comprises a plurality of extractor members (11) movable between a rest position and a working position of extraction of the thermoformed articles;
said control member (6) comprises a slider (14) which is slidable according to an extraction direction of said extractor members (11) and which is directly actuated by the motor (10).

5. Machine according to claim 4, wherein said electric motor (10) is a linear motor.

6. Machine according to claim 4, wherein said electric motor (10) comprises a rotating shaft and said control member (6) comprises transmission means for converting rotary motion into translatory motion.

7. Machine according to any one of claims 4 to 6, wherein said extractor members are shaped substantially as rods (11) with a termination (16) adapted to extract the thermoformed articles from the moving half-mould (4).

8. Machine according to claim 7, wherein said rods (11) are fixed to a support plate (15).

9. Method for manufacturing thermoformed articles in a thermoforming machine with a tilting moving platen wherein said moving platen (2) has a roto-translatory motion between a moulding position and a position for expulsion of the thermoformed articles, comprising:
moulding of thermoformed articles (9) between a fixed half-mould (3) and a moving half-mould (4),
expulsion of thermoformed articles from said moving half-mould,
**characterized in that** said step of expulsion of thermoformed articles is performed by an extractor group (5) actuated by an electric motor (10).
